Europäisches Patentamt

European Patent Office

Office européen des brevets

(11) Veröffentlichungsnummer: **0 503 318 A1**

## (12) EUROPÄISCHE PATENTANMELDUNG

(21) Anmeldenummer: **92102704.1**

(22) Anmeldetag: **19.02.92**

(51) Int. Cl.5: **G01M 17/00**, G01M 17/02

(30) Priorität: **09.03.91 DE 4107585**

(43) Veröffentlichungstag der Anmeldung:
**16.09.92 Patentblatt 92/38**

(84) Benannte Vertragsstaaten:
**DE FR GB IT**

(71) Anmelder: **KARL KRÄMER
INDUSTRIE-AUTOMATION GmbH & CO. KG
An der Zinkhütte 12
W-5060 Bergisch Gladbach 2(DE)**

(72) Erfinder: **Lang, Ralf, Dipl.-Ing.
Landwehr 31
W-5206 Neunkirchen-Seelscheid 2(DE)**

(74) Vertreter: **Nau, Walter, Dipl.-Ing.
Johann-Pullem-Strasse 8
W-5000 Köln 50(Sürth)(DE)**

(54) **Prüfstand für Fahrzeugreifen.**

(57) Prüfstand für Fahrzeugreifen mit einer Reifenabrolleinrichtung, z.B. Prüftrommel (2), die in einem Maschinengestell (1) gelagert ist, und mit einem Radführungselement (3), das ebenfalls am Maschinengestell (1) gelagert ist, einen Tragarm (5) für das Prüfrad (4) aufweist und radial zur Prüftrommel (2) verschiebbar ist. Das Radführungselement (3) ist als Halbgabel (8) ausgebildet, die einerseits den Tragarm (5) trägt und andererseits einen Führungskörper (11) aufweist, der im Maschinengestell (1) gelagert und auf die Reifenabrolleinrichtung (2) ausgerichtet ist.

Fig.2

EP 0 503 318 A1

Die Erfindung bezieht sich auf einen Prüfstand für Fahrzeugreifen mit einer Reifenabrolleinrichtung, insbesondere einer Prüftrommel, die an einem Maschinengestell gelagert ist und einen auf unterschiedliche Drehzahlen steuerbaren Antrieb aufweist, und mit einem Radführungselement, das ebenfalls direkt oder indirekt am Maschinengestell gelagert ist, einen Tragarm für das Prüfrad aufweist und radial zur Prüftrommel durch eine Zustelleinrichtung zum Andrücken des Prüfrades an die Reifenabrolleinheit verschiebbar ist.

Da es abgesehen von den erwähnten Prüftrommeln bei Prüfständen für Fahrzeugreifen bzw. Reifenprüfmaschinen auch riemenartige Flachbahneinheiten gibt, wurde die Bezeichnung Reifenabrolleinheit gewählt, um diesen Unterschieden Rechnung zu tragen.

Die Anmelderin stellt Reifenprüfmaschinen verschiedener Größen her. Diese weisen Maschinengestelle auf, in denen Prüftrommels gelagert sind, wobei die Prüfräder auf Radnaben gelagert sind, die auf einem Tragarm geführt sind. Der Tragarm seinerseits ist an einem Führungsschlitten befestigt, an dem die Zustelleinrichtung zum Andrücken des Prüfrades an die Prüftrommel angreift. Die Lagerung des Führungsschlittens auf dem Maschinengestell befindet sich seitlich neben dem Prüfrad und erfolgt über Rollenführungen. Obwohl die Zustelleinrichtung koaxial zur Andrückrichtung des Prüfrades auf die Prüftrommel erfolgt, stellen sich in der Rollenführung verschiedenartige Kräfte ein. Auch die durch das Prüfrad eingeleiteten Schwingungen erzeugen Kräfte in der Rollenführung, so daß ein unerwünscht schneller Verschleiß eintreten kann. Weiterhin entstehen Reibkräfte, die Verfälschungen beim Zustellen der Prüflast bewirken.

Aufgabe der vorliegenden Erfindung ist es daher, diese Nachteile zu beheben und eine Lagerung mit minimalem Verschleiß und mit minimaler Reibung zur Verfügung zu stellen. Gelöst wird die Aufgabe der Erfindung dadurch, daß das Radführungselement nach Art einer Halbgabel ausgebildet ist, an der der Tragarm befestigt ist, daß an der Halbgabel ein Führungskörper vorgesehen ist, der im Maschinengestell verschiebbar gelagert ist und daß die Verschiebe-Mittelachse des Führungskörpers auf die Reifenabrolleinheit ausgerichtet ist, vorzugsweise aber koaxial zur Kraftwirklinie der Prüfradlast verläuft. Die Verschiebe-Mittelachse kann u.U. unter einem spitzen Winkel zur Reifenabrolleinheit ausgerichtet sein, so daß sich ein Sturzzwinkel des Prüfrades und/oder ein Nachlauf oder Vorlauf ergibt. Dies ist allerdings bei Maschinen mit Sturz- und Schräglaufverstellung nicht so günstig. Durch die Ausgestaltung der Erfindung, insbesondere bei koaxialer Ausrichtung des Führungskörpers zur Kraftwirkrichtung, ist nunmehr die Lagerung des Radführungselements auf ein Mindestmaß an äußeren Krafteinwirkungen reduziert, so daß nur eine minimale Reibung, ein geringer, vernachlässigbarer Verschleiß und eine hohe und konstante Regelgenauigkeit erzielt wird. Weiterhin hat diese "Grundmaschinenausstattung" den Vorteil, daß sie mit geringen Mitteln in weiteren Stufen ausgebaut werden kann, d.h. es besteht mit einfachen Mitteln die Möglichkeit, eine Sturz- und eine Schräglaufverstelleinrichtung für das Prüfrad anzubringen, ohne daß der grundsätzliche Aufbau geändert werden müßte. Bisher war zum Verstellen des Sturzes und des Schräglaufes eine Sondermaschine erforderlich, bei der der Führungsschlitten in einem ersten und einem zweiten Schwenkrahmen gelagert ist. Um die Schräglaufverstellung passend zur Prüftrommelachse ausbilden zu können, war sogar eine halbhohle Trommel notwendig.

Der Führungskörper der Halbgabel der vorliegenden Erfindung kann sowohl als Profilkörper ausgebildet sein, der über geeignete Lagerungen im Maschinengestell um seine Achse drehfest aber längsverschiebbar angeordnet ist. Dazu bietet sich als Lagerung mechanischer Art Walzkörper, Gleitflächen und dergl. an. Es ist aber auch möglich, den Führungskörper über einzelne hydrostatische Lagerelement spiel- und berührungsfrei zu führen. Diese hydrostatische Lagerung über Einzelelemente oder über ein zentrales hydrostatisches Lager bietet sich insbesondere dann an, wenn der Führungskörper als Zylinderkörper ausgebildet ist, der dreh- und längsverschiebbar im Maschinengestell geführt ist. Aus Kosten- und Gewichtsgründen ist es von Vorteil, wenn der Führungskörper als Führungsrohr ausgebildet ist. In diesem Fall kann auch die Zustelleinrichtung, die in vorteilhafter Weise als Hydraulikzylinder ausgeführt ist, zumindest teilweise innerhalb des Führungsrohres angeordnet sein. Selbstverständlich kann das Führungsrohr auch als Profilrohr ausgeführt sein. Um auch über die Zustelleinrichtung bzw. den Hydraulikzylinder keine exzentrischen Kräfte aufkommen zu lassen, bietet sich auch hier an, daß die Mittelachse des Hydraulikzylinders koaxial zur Verschiebe-Mittelachse des Führungskörpers verläuft.

Ist der Führungskörper als Zylinder ausgebildet, so ist die Verschiebe-Mittelachse identisch mit der Zylinderachse. Je nach Ausgestaltung des Profilkörpers als Führungskörper muß diese Verschiebe-Mittelachse nach geometrischen Gegebenheiten ermittelt werden.

Auch bei einer Grundmaschine, die zunächst ohne Sturz- und Schräglaufverstellung ausgeführt ist, kann der Führungskörper als Zylinderkörper ausgebildet sein. Die Führung in Drehrichtung um die Mittelachse des Zylinderkörpers übernimmt dann eine Koppelstange, die sich einerseits am Maschinengestell und andererseits an einer Drehmomentstütze an der Halbgabel bzw. an dem Zylinderkörper abstützt. Diese Koppelstange muß an einer Seite axial verschiebbar sein, um eine Zustellung, d.h. eine Längsbewegung des Zylinderkörpers ohne eine zusätzliche Verdrehung im Maschinengestell zu erlauben. In vorteilhafterweise werden daher zwei Drehmomentstützen oder eine Drehmomentstütze und die Halbgabel sowie ein dazwischen angeordnetes Gleitprofil bzw. Gleitstange benutzt, um die Beweglichkeit der Halbgabel in Zustellrichtung zu gewährleisten. Der Kopf der Koppelstange kann auf dem Gleitprofil bzw. auf der Gleitstange in beliebiger Weise mechanisch oder hydrostatisch gelagert sein. Auch an dieser Stelle soll eine minimale Reibung und minimaler Verschleiß erzielt werden.

Durch eine Verstellung der Koppelstange, die als Spindel oder Hydraulikzylinder ausgebildet sein kann, kann eine beliebige Verstellung des Schräglaufes erfolgen, um auch Kräfte am Prüfrad zu simulieren, wie sie bei Kurvenfahrt einer Fahrzeuges auftreten.

Eine Schräglaufverstellung kann ohne die Ausbildung des Führungskörpers als Zylinderkörper und Verstellung der Koppelstange auch dadurch erfolgen, daß zwischen Halbgabel und Führungskörper ein Lagerkopf angeordnet ist, dessen Drehachse parallel, vorzugsweise koaxial zur VerschiebeMittelachse des Führungskörpers verläuft. Dabei kann auch ein Führungskörper zum Einsatz kommen, der als Profilkörper ausgebildet ist. Eine Verstellung der Halbgabel zum Führungskörper innerhalb des Lagerkopfes bewirkt ebenfalls eine Schräglaufverstellung. Bei beiden Schräglaufverstellversionen handelt es sich um Elemente, die nachträglich ohne großen Umbau der Grundmaschine nachgerüstet werden können. Im einen Fall wird eine starre Koppelstange durch eine in ihrer Länge variable Stange ersetzt, im anderen Fall wird zwischen der Halbgabel und dem Führungskörper ein Lagerkopf eingesetzt bzw. die starre Einheit Halbgabel/Führungskörper durch eine mit Lagerkopf ersetzt.

Eine Sturzverstelleinrichtung kann dadurch zur Verfügung gestellt werden, daß die Halbgabel an beliebiger Stelle einschl. des Übergangs zwischen Halbgabel und Führungskörpers oder der Tragarm in der Halbgabel oder der Tragarm selbst an einer beliebigen Stelle oder die Nabe des Prüfrades auf dem Tragarm schwenkbar ausgeführt sind. Dabei ist die Schwenkachse im wesentlichen senkrecht zu der Ebene ausgerichtet, die durch die Verschiebe-Mittelachse des Führungskörpers und die Drehachse der Prüftrommel gebildet ist. Da die zuvor geschilderte Schwenkbewegung zwar die gewünschte Sturzverstellung herbeiführt, gleichzeitig aber die Aufstandsfläche des Prüfrades auf der Prüftrommel verlagert, ist es von Vorteil, insbesondere unter der Prämisse, daß auch nach Sturzverstellung keine Verschiebung der Kraftwirkrichtung erfolgen soll, dies zu korrigieren. Diese Korrektur kann ebenfalls sowohl im Bereich der Halbgabel, des Tragarmes oder der Habe dadurch erfolgen, daß das Prüfrad parallel zu der zuvor definierten Ebene zurückbewegt wird. Wie ohne weiteres ersichtlich, kann auch die Sturzverstelleinrichtung durch nachträgliche Modifikation oder Austausch von Teilen der Grundmaschine verwirklicht werden.

Zur weiteren Erläuterung der Erfindung wird auch die Zeichnungen verwiesen, in denen Ausführungsbeispiele der Erfindung vereinfacht dargestellt sind.

Es zeigen:

| Fig. 1 | eine Seitenansicht eines Prüfstandes für Fahrzeugreifen, |
| Fig. 2 | eine Draufsicht auf einen Prüfstand gemäß Fig. 1, |
| Fig. 3 | einen Schnitt durch den Prüfstand gemäß der Linie III - III in Fig. 1 und |
| Fig. 4 bis 6 | eine Seitenansicht, eine Draufsicht und einen Schnitt entsprechend den Fig. 1 bis 3 in modifizierter Ausgestaltung. |

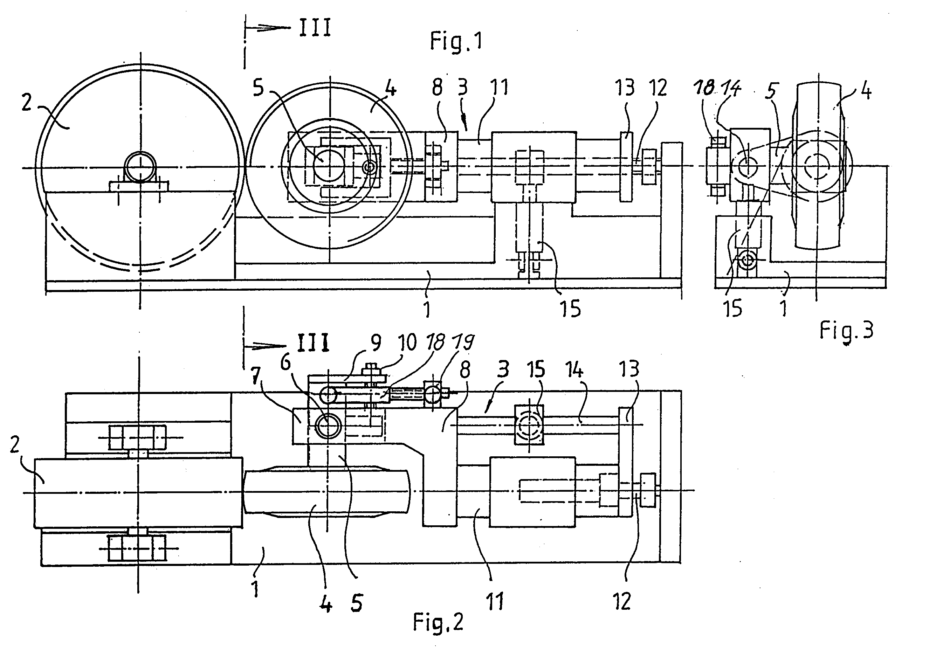

In den Fig. 1 bis 6 sind, soweit im einzelnen dargestellt, mit 1 ein Maschinengestell bezeichnet, an dem eine Prüftrommel 2 gelagert ist. Die Prüftrommel ist, nicht näher dargestellt, aber wie in der Patentbeschreibung ausgeführt, mit einem Antrieb für verschiedene Drehzahlen ausgestattet. Weiterhin ist am Maschinengestell 1 ein insgesamt mit 3 bezeichnetes Radführungselement gelagert, das ein Prüfrad 4 trägt. Das Prüfrad 4 ist über eine nicht dargestellte Radnabe an einem Tragarm 5 drehbar gelagert. Der Tragarm 5 seinerseits ist über ein Schwenklager 6 an einem freien Schenkel 7 einer Halbgabel 8 geführt. An dem Tragarm 5, am gegenüberliegenden Ende des Prüfrades ist ein Flansch 9 befestigt, der an einer Gewindestange 10 angelenkt ist, die sich am Schwenklager 6 abstützt, so daß der Tragarm 5 durch Verstellung der Gewindestange 10 im Schwenklager 6 längs seiner Achse verschoben wird. Weiterhin greift am Tragarm 5 eine Gabel 18 an, die sich in einem an der Halbgabel 8 befestigten Gewindekopf 19 abstützt. Durch eine Verschiebung der Gabel 18 erfolgt eine Verschwenkung des Tragarms 5 in der Halbgabel 8 über das Schwenklager 6 und damit eine Verstellung des Sturzes des Prüfrades.

Die Halbgabel 8 ist mit ihrem anderen Ende an einem Führungskörper 11 befestigt, der in den Fig. 1 bis 3 als Zylinderrohr ausgeführt ist und in der Nabe des Maschinengestells gelagert ist. Die Lagerung des Zylinderkörpers in der Nabe ist als hydrostatisches Lager ausgebildet, so daß eine praktisch spiel-, verschleiß- und reibungsfreie Lagerung gewährleistet ist. Der Führungskörper 11 gemäß den Fig. 1 bis 6 ist als Führungsrohr ausgebildet, so daß eine mit 12 bezeichnete Zustelleinrichtung im wesentlichen innerhalb des Führungsrohres angeordnet ist und sich dort abstützt und andererseits eine Gegenstütze am Maschinengestell 1 hat.

Wie den Fig. 1 bis 3 weiterhin zu entnehmen ist, ist am Ende des Führungskörpers 11 eine Drehmomentstütze 13 befestigt und zwischen dieser und der Halbgabel eine Gleitstange 14 angeordnet, an der eine Koppelstange 15 angreift, die sich anderseits am Maschinengestell 1 abstützt. Der Kopf der Koppelstange, die als Hydraulikzylinder ausgebildet ist, ist auf der Gleitstange mit minimalem Spiel und minimaler Reibung entweder über eine mechanische Lagerung (Kugelbüchse, Wälzkörperführung, Gleitlager) oder ebenfalls über eine hydrostatische Lagerung gelagert.

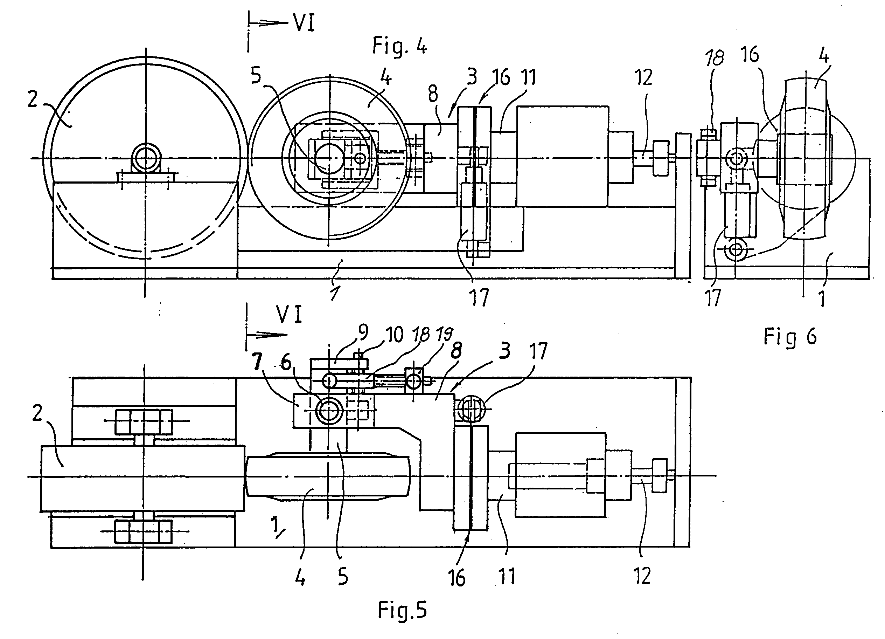

Wie den Fig. 4 bis 6 weiter zu entnehmen ist, ist dort die Halbgabel 8 über einen Lagerkopf 16 an dem Führungskörper 11 gehalten. Der Führungskörper ist in diesem Fall (nicht dargestellt) als Profilrohr ausgebildet, so daß er drehfest aber längsverschiebbar in der Nabe und damit am Maschinengestell 1 geführt ist. Auch in diesem Fall sind zwischen dem Führungskörper und der Nabe verschiedene Lagerungen bzw. Führungen möglich, um einen minimalen Verschleiß und eine minimale Reibung sicherzustellen. Zwischen den beiden Teilen des Lagerkopfes 16 ist eine Verstelleinrichtung 17, vorzugsweise ein Hydraulikzylinder, angeordnet, so daß durch Längenverstellung der Verstelleinrichtung eine Verdrehung der Halbgabel zum Führungskörper und damit ebenfalls eine Schräglaufverstellung ermöglicht wird.

**Patentansprüche**

1. Prüfstand für Fahrzeugreifen mit einer Reifenabrolleinheit, insbesondere einer Prüftrommel, die an einem Maschinengestell gelagert ist und einen auf unterschiedliche Drehzahlen steuerbaren Antrieb aufweist, und mit einem Radführungselement, das ebenfalls direkt oder indirekt am Maschinengestell gelagert ist, einen Tragarm für das Prüfrad aufweist und radial zur Prüftrommel durch eine Zustelleinrichtung zum Andrücken des Prüfrades an die Reifenabrolleinheit verschiebbar ist, dadurch gekennzeichnet, daß das Radführungselement (3) nach Art einer Halbgabel (8) ausgebildet ist, an der der Tragarm (5) befestigt ist, daß an der Halbgabel (8) ein Führungskörper (11) vorgesehen ist, der im Maschinengestell (1) verschiebbar gelagert ist, und daß die Verschiebe-Mittelachse des Führungskörpers (11) auf die Reifenabrolleinheit (Prüftrommel 2) ausgerichtet ist.

2. Prüfstand nach Anspruch 1, dadurch gekennzeichnet, daß die Verschiebe-Mittelachse des Führungskörpers (11) koaxial zur Kraftwirklinie der Prüfradlast verläuft.

3. Prüfstand nach Anspruch 1 oder 2, dadurch gekennzeichnet, daß der Führungskörper (11) als Profilkörper ausgebildet ist und um seine Achse drehfest, aber längsverschiebbar im Maschinengestell (1) gelagert ist.

4. Prüfstand nach einem der vorhergehenden Ansprüche, dadurch gekennzeichnet, daß der Führungskörper (11) als Zylinderkörper ausgebildet ist und dreh- und längsverschiebbar im Maschinengestell (1) gelagert ist.

5. Prüfstand nach einem der vorhergehenden Ansprüche, dadurch gekennzeichnet, daß die Lagerung des Führungskörpers (11) im Maschinengestell (1) als mechanische Führung, z.B. Wälzkörperführung, Kugelbüchse und dergl. ausgebildet ist.

6. Prüfstand nach einem der vorhergehenden Ansprüche, dadurch gekennzeichnet, daß die Lagerung hydrostatische Lager aufweist oder als hydrostatische Lagerung ausgeführt ist.

7. Prüfstand nach einem der vorhergehenden Ansprüche, dadurch gekennzeichnet, daß der Führungskörper (11) als Führungsrohr ausgebildet ist.

8. Prüfstand nach einem der vorhergehenden Ansprüche, dadurch gekennzeichnet, daß die Zustelleinrichtung (12) als Hydraulikzylinder ausgeführt ist, dessen Mittelachse koaxial zur Verschiebe-Mittelachse des Führungskörpers (11) verläuft.

9. Prüfstand nach einem der vorhergehenden Ansprüche, dadurch gekennzeichnet, daß der Hydraulikzylinder zumindest teilweise im Führungsrohr angeordnet ist.

10. Prüfstand nach einem der vorhergehenden Ansprüche, dadurch gekennzeichnet, daß an dem Führungskörper (11) und/oder an der Halbgabel (8) zumindest eine Drehmomentstütze (13) befestigt ist, an der eine Koppelstange (15) angreift, die andererseits am Maschinengestell (1) abgestützt ist, und daß die Koppelstange (15) mit einem Ende parallel zur Verschiebe-Mittelachse des Führungskörpers (11) verschiebbar ist.

11. Prüfstand nach einem der vorhergehenden Ansprüche,
dadurch gekennzeichnet, daß zwischen zwei Drehmomentstützen (13) oder einer Drehmomentstütze (13) und der Halbgabel (8) ein Gleitprofil oder Gleitstange (14) angeordnet ist, auf der die Koppelstange (15) verschiebbar geführt ist.

12. Prüfstand nach einem der vorhergehenden Ansprüche,
dadurch gekennzeichnet, daß die Koppelstange (15) längenveränderlich, z.B. als Hydraulikzylinder, ausgeführt ist.

13. Prüfstand nach einem der vorhergehenden Ansprüche,
dadurch gekennzeichnet, daß zwischen der Halbgabel (8) und dem Führungskörper (11) ein Lagerkopf (16) angeordnet ist, dessen Drehachse parallel zur Verschiebe-Mittelachse des Führungskörpers (11) verläuft, und daß die Halbgabel (8) zum Führungskörper (11) mittels einer Verstelleinrichtung (17), z.B. Hydraulikzylinder, im Lagerkopf (16) verdrehbar ist.

14. Prüfstand nach einem der vorhergehenden Ansprüche,
dadurch gekennzeichnet, daß die Halbgabel (8) oder der Tragarm (5) in der Halbgabel (8) oder der Tragarm (5) oder eine Nabe des Prüfrades (4) auf dem Tragarm (5) schwenkbar sind, wobei die Schwenkachse im wesentlichen senkrecht zu der Ebene verläuft, die durch die Verschiebe-Mittelachse des Führungskörpers (11) und die Drehachse der Prüftrommel (2) gebildet ist.

15. Prüfstand nach einem der vorhergehenden Ansprüche,
dadurch gekennzeichnet, daß die Halbgabel (8) gegenüber dem Führungskörper (11) oder der Tragarm (5) in der Halbgabel (8) oder die Nabe auf dem Tragarm (5) zum Ausgleich der Verlagerung des Prüfrades (4) auf der Reifenabrolleinrichtung durch die Schwenkbewegung im wesentlichen längs der Achse des Tragarmes (5) bzw. des Prüfrades verschiebbar sind.

Fig.1

Fig.3

Fig.2

EP 0 503 318 A1

Fig. 4

Fig.5

Fig 6

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-U-9 012 154 (MANNESMANN AG) | 1,2 | G01M17/00 |
| Y | * Seite 4; Abbildung 1 * | 3-15 | G01M17/02 |
| | --- | | |
| X | US-A-4 848 143 (M. USHIKOSHI) | 1,2 | |
| Y | * Spalte 3 - Spalte 5 * | 3-15 | |
| | --- | | |
| X | PATENT ABSTRACTS OF JAPAN vol. 5, no. 161 (P-84)(833) 16. Oktober 1981 & JP-A-56 092 429 ( HITACHI SEISAKUSHO K.K. ) 27. Juli 1981 * Zusammenfassung * | 1,2 | |
| | ----- | | |

| RECHERCHIERTE SACHGEBIETE (Int. Cl.5 ) |
|---|
| G01M |

Der vorliegende Recherchenbericht wurde für alle Patentansprüche erstellt

| Recherchenort | Abschlußdatum der Recherche | Prüfer |
|---|---|---|
| BERLIN | 10 JUNI 1992 | DIETRICH A. |